# EUROPEAN PATENT APPLICATION

(11) **EP 3 336 379 A1**
(43) Date of publication of application: **20.06.2018**
(21) Application number: 16835052.8
(22) Date of filing: 03.08.2016
(51) Int. Cl.: F16F 15/08, B29C 67/00, B32B 27/04, B60K 5/12

(54) **VIBRATION-PROOF MEMBER AND METHOD FOR MANUFACTURING VIBRATION-PROOF MEMBER**

(30) Priority: 10.08.2015 JP 2015158388
(71) Applicant: Bridgestone Corporation, Tokyo 104-8340 (JP)
(72) Inventor: KOJIMA, Hiroshi, Tokyo 104-8340 (JP)
(74) Representative: Oxley, Robin John George
(86) International application number: PCT/JP2016/072861
(87) International publication number: WO 2017/026355

(57) **Abstract**

A torque rod is provided to be linked with a vibration-producing portion and a vibration-receiving portion. A fiber-shaped resin is woven between plural arrayed fiber-shaped reinforcing members. The fiber-shaped resin is melted to form a thermoplastic resin layer that is integrated with the reinforcing members. A thermoplastic resin that forms a covering layer is laminated onto a surface of the thermoplastic resin layer.

## Description

### TECHNICAL FIELD

The present invention relates to a damping member that is connected to at least one of a vibration-producing portion and a vibration-receiving portion, and to a fabrication process of the damping member.

### BACKGROUND ART

Heretofore, a torque rod that links a power unit with a vehicle body and suppresses vibrations of the power unit has been known as a damping member (for example, see Japanese Patent Application Laid-Open (JP-A) No. 2014-25516). This torque rod is molded of a resin.

In a preparation process when the torque rod is to be molded of the resin, carbon fibers for reinforcement are injected into a cavity of a die, an epoxy resin is mixed with a high-temperature curing agent and a low-temperature curing agent, and the mixture is charged into the cavity. Hence, the torque rod fabricated of resin is formed by a heat treatment process.

### SUMMARY OF INVENTION

### TECHNICAL PROBLEM

However, in this torque rod, the carbon fibers constituted of short fibers for reinforcement are distributed through the whole of the torque rod. Therefore, more efficient use of the carbon fibers with a view to improving strength of the torque rod is not foreseen. A further increase in strength of the torque rod is desired.

An object of an embodiment of the present invention is to provide a damping member whose strength is efficiently improved by a fiber material, and a fabrication process of the damping member.

### SOLUTION TO PROBLEM

A first aspect is a damping member for linking a vibration-producing portion with a vibration-receiving portion, the damping member including: plurally arrayed fiber-shaped reinforcing members; a thermoplastic resin layer in which a fiber-shaped thermoplastic resin that is woven between the reinforcing members has been fused and integrated with the reinforcing members; and a thermoplastic resin forming a covering layer that is laminated on a surface of the thermoplastic resin layer.

That is, the plural fiber-shaped reinforcing members are arrayed in a central portion of the damping member; the reinforcing members have been integrated by the fiber-shaped thermoplastic resin that is woven between the reinforcing members fusing and solidifying. Therefore, the reinforcing members are more firmly joined to one another than in a structure in which short-fiber reinforcing members are distributed through the whole body, and the reinforcing members may be utilized efficiently with regard to improving strength of the damping member.

The covering layer is laminated onto and integrated with the surface of the thermoplastic resin layer that has been integrated with the reinforcing members. If the thermoplastic resin forming the covering layer were fused and impregnated with the plurally arrayed fiber-shaped reinforcing members to form the damping member, the thermoplastic resin layer would be formed only at surface portions of the reinforcing members.

However, in the damping member of the present aspect, because the covering layer is integrated with the thermoplastic resin layer that has been fused and formed between the reinforcing members, separation of the covering layer from the reinforcing members may be suppressed.

In a second aspect, in the first aspect, a first annular portion, a second annular portion and a linking portion are formed by the reinforcing members being curved into an annular shape, the first annular portion linking with the vibration-producing portion, the second annular portion linking with the vibration-receiving portion, and the linking portion linking the first annular portion with the second annular portion.

The term "the reinforcing members being curved into an annular shape" refers to the reinforcing members being looped; the meaning of the term encompasses situations in which distal end portions and proximal end portions of the looped reinforcing members are superposed, situations in which the distal ends and proximal ends of the looped reinforcing members abut together, and situations in which the distal ends and proximal ends of the looped reinforcing members are set apart.

Thus, the damping member is provided with the first annular portion to be linked to a vibration-producing portion such as an engine or the like and the second annular portion to be linked to a vibration-receiving portion such as a vehicle body or the like; these annular portions are formed by the fiber-shaped reinforcing members being curved.

Therefore, compared to a structure in which annular portions are formed with reinforcing members in short fiber shapes that are finely divided, stiffness of the annular portions that bear loads may be raised. Thus, unintended opening up or the like of the annular portions may be suppressed.

The linking portion that links the first annular portion with the second annular portion is formed together with the first annular portion and the second annular portion by the curving of the reinforcing members, which improves tensile stiffness of the linking portion. Therefore, when a force acts in a direction to move the first annular portion and second annular portion apart, this force may be resisted by tensile strength of the fiber-shaped reinforcing members.

In a third aspect, in the second aspect, end portions of the reinforcing members are superposed on the linking portion.

Thus, because the end portions of the reinforcing members are superposed on the linking portion, resistance to a tensile force may be made greater than in a structure in which the end portions are superposed on one of the annular portions. Furthermore, because the end portions of the reinforcing members are disposed away from the annular portions that are more likely to bear loads, durability of the damping member is improved.

A fourth aspect is a fabrication process of a damping member for linking a vibration-producing portion with a vibration-receiving portion, the fabrication process including: forming a composite sheet into a predetermined shape, the composite sheet a fiber-shaped thermoplastic resin being woven between plurally arrayed fiber-shaped reinforcing members; heating the composite sheet; forming a core portion with a predetermined shape; placing the core portion in a forming die for forming the damping member; laminating an unsolidified thermoplastic resin; and heating the unsolidified thermoplastic resin.

That is, the composite sheet, in which the fiber-shaped thermoplastic resin is woven between the plurally arrayed fiber-shaped reinforcing members, is formed into the predetermined shape and the composite sheet in the predetermined shape is heated. Thus, the core portion is formed in which the reinforcing members and the thermoplastic resin have been integrated by the fiber-shaped thermoplastic resin that is woven between the reinforcing members fusing and solidifying. Then, the core portion is put into the forming die for forming the reinforcing member, and the unsolidified thermoplastic resin is laminated thereon and heated. Thus, the damping member is formed, which is reinforced by the reinforcing members and on the surface of which the covering layer is laminated.

The plural fiber-shaped reinforcing members are arrayed in a central portion of the fabricated damping member; the reinforcing members have been integrated by the fiber-shaped thermoplastic resin that is woven between the reinforcing members fusing and solidifying. Therefore, the reinforcing members are more firmly joined to one another than in a structure in which short-fiber reinforcing members are distributed through the whole body, and the reinforcing members may be utilized efficiently with regard to improving strength of the damping member.

The covering layer is laminated onto and integrated with the surface of the thermoplastic resin layer that has been integrated with the reinforcing members. If the thermoplastic resin forming the covering layer were fused and impregnated with the plurally arrayed fiber-shaped reinforcing members to form the damping member, the thermoplastic resin layer would be formed only at surface portions of the reinforcing members.

However, in this damping member, because the covering layer is integrated with the thermoplastic resin layer that has been fused and formed between the reinforcing members, separation of the covering layer from the reinforcing members may be suppressed.

A fifth aspect is a fabrication process of a damping member that includes a first annular portion for linking with a vibration-producing portion, a second annular portion for linking with a vibration-receiving portion, and a linking portion for linking the first annular portion with the second annular portion, the fabrication process including: curving a composite sheet in which a fiber-shaped thermoplastic resin is woven between plurally arrayed fiber-shaped reinforcing members; forming the composite sheet into a predetermined shape; heating the composite sheet; forming a core portion including a portion that is to structure the first annular portion, a portion that is to structure the second annular portion, and a portion that is to structure the linking portion; placing the core portion in a forming die for forming the damping member; laminating an unsolidified thermoplastic resin; and heating the unsolidified thermoplastic resin.

That is, the first annular portion, the second annular portion and the linking portion linking the first annular portion with the second annular portion are formed by the step of curving the composite sheet in which the fiber-shaped thermoplastic resin is woven between the plurally arrayed fiber-shaped reinforcing members.

By the heating of the curved composite sheet, the core portion is formed in which the reinforcing members and the thermoplastic resin have been integrated by the fiber-shaped thermoplastic resin that is woven between the reinforcing members fusing and solidifying. Then, the core portion is put into the forming die for forming the reinforcing member, and the unsolidified thermoplastic resin is laminated thereon and heated. Thus, the damping member reinforced by the reinforcing members is formed.

In the fabricated damping member, the first annular portion to be linked to a vibration-producing portion and the second annular portion to be linked to a vibration-receiving portion have been formed by the composite sheet being curved. Therefore, compared to a structure in which annular portions are formed with reinforcing members in short fiber shapes that are finely divided, stiffness of the annular portions that bear loads may be raised. Thus, unintended opening up or the like of the annular portions may be suppressed.

Moreover, the linking portion that links the first annular portion with the second annular portion is formed together with the first annular portion and the second annular portion by the curving of the composite sheet, which improves a tensile stiffness of the linking portion based on the fiber-shaped reinforcing members that structure the composite sheet. Therefore, when a force acts in a direction to move the first annular portion and second annular portion apart, this force may be resisted by the tensile strength of the fiber-shaped reinforcing members.

In a sixth aspect, in the fifth aspect, forming the core portion includes superposing end portions of the composite sheet on the portion that is to structure the linking portion.

Thus, because the end portions of the composite sheet are superposed on the linking portion, resistance to a tensile force in the fabricated damping member may be made greater than in a structure in which the end portions are superposed on one of the annular portions. Furthermore, because the end portions of the reinforcing members are disposed away from the annular portions that are more likely to bear loads, durability of the fabricated damping member is improved.

### ADVANTAGEOUS EFFECTS OF INVENTION

With the structures described above, the present aspects may efficiently improve strength of a damping member with a fiber material.

### BRIEF DESCRIPTION OF DRAWINGS

Fig. 1 is a plan view showing a torque rod according to a present exemplary embodiment.
Fig. 2 is a horizontal sectional view showing the torque rod according to the same exemplary embodiment.
Fig. 3 is a schematic diagram corresponding to a section cut along line A-A in Fig. 1.
Fig. 4A is an explanatory diagram showing a fabrication process of the torque rod according to the same exemplary embodiment, depicting a state in molding of a core portion of the torque rod by a die.
Fig. 4B is an explanatory diagram showing the fabrication process of the torque rod according to the same exemplary embodiment, depicting a state in curving processing of a prepreg sheet.
Fig. 4C is an explanatory diagram showing the fabrication process of the torque rod according to the same exemplary embodiment, depicting a state in accommodation of the core portion in a die.
Fig. 4D is an explanatory diagram showing the fabrication process of the torque rod according to the same exemplary embodiment, depicting a cross section of the molded torque rod.
Fig. 5 is an enlarged view of principal portions showing the prepreg sheet according to the same exemplary embodiment.

### DESCRIPTION OF EMBODIMENTS

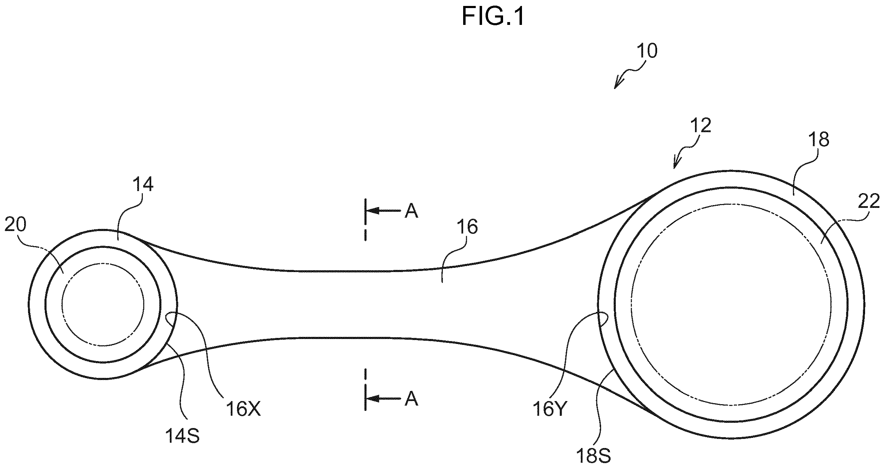

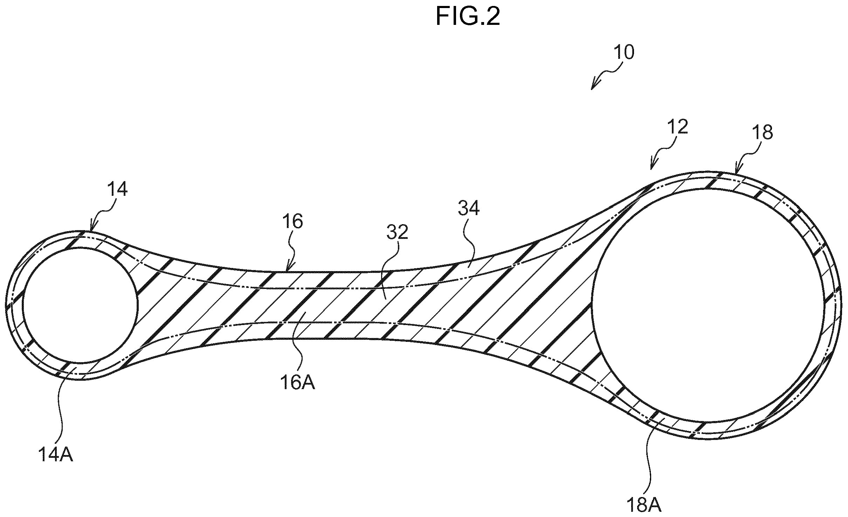

Herebelow, an exemplary embodiment of the present invention is described in accordance with the drawings. Fig. 1 to Fig. 3 are diagrams showing a torque rod 10 that serves as an example of a damping member according to the present exemplary embodiment. The torque rod 10 is provided in a vehicle, links an engine that is an example of a vibration-producing portion with a vehicle body that is an example of a vibration-receiving portion, and suppresses vibrations of the engine.

A rod main body 12 of the torque rod 10 is structured with a first annular portion 14, a linking portion 16 and a second annular portion 18. The first annular portion 14 is formed in a circular tube shape. The linking portion 16 projects sideward from the first annular portion 14. The second annular portion 18 is formed in a circular tube shape joined to a distal end of the linking portion 16.

The first annular portion 14 is formed with a smaller diameter than the second annular portion 18. A first rubber bush 20 in a circular tube shape is structured so to as to fit tightly into the inner side of the first annular portion 14. Thus, the torque rod 10 is structured such that the first annular portion 14 may be connected to the engine via the first rubber bush 20. A second rubber bush 22 in a circular tube shape is structured so to as to fit tightly into the inner side of the second annular portion 18. Thus, the torque rod 10 is structured such that the second annular portion 18 may be connected to the vehicle body via the second rubber bush 22.

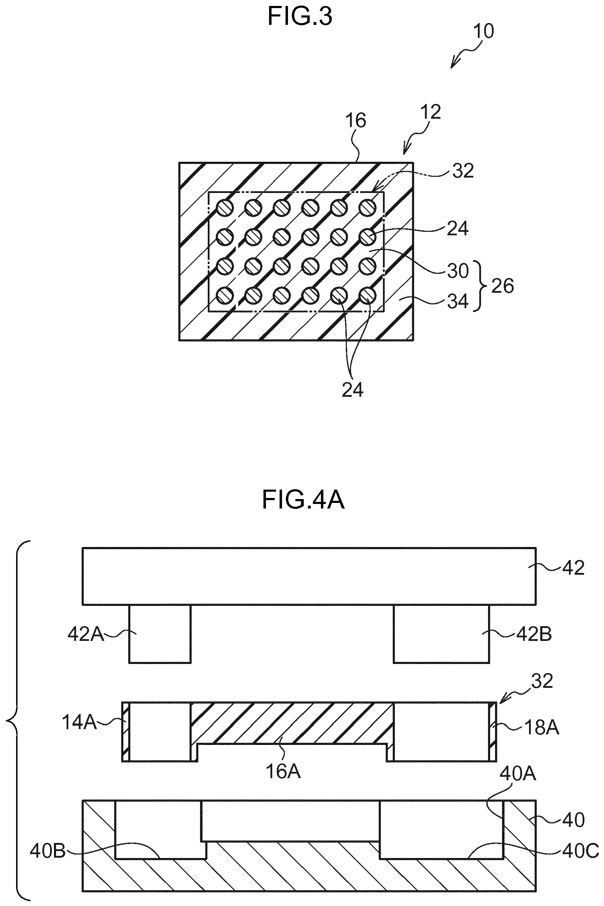

The linking portion 16 is formed in a rod shape. As shown in Fig. 3, the cross section of the linking portion 16 is formed in a rectangular shape. As shown in Fig. 1, the linking portion 16 is structured such that a width dimension increases towards the end portions thereof. One end portion 16X is joined to a side face 14S of the first annular portion 14, and another end portion 16Y is joined to a side face 18S of the second annular portion 18.

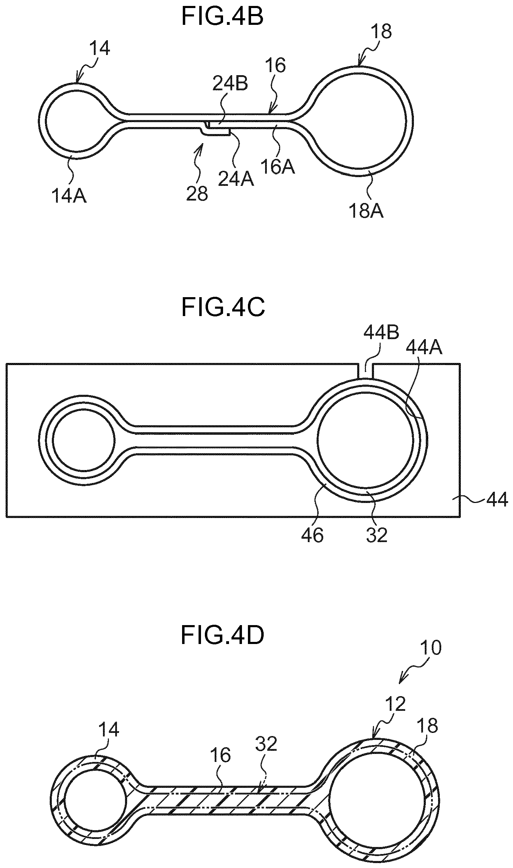

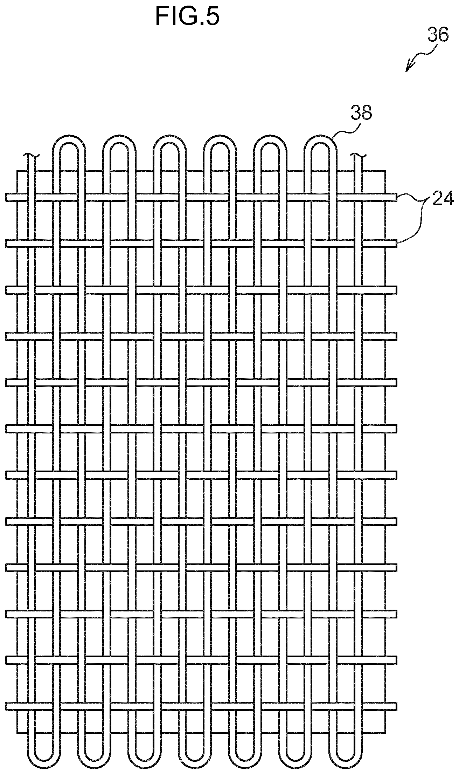

Fig. 4A to Fig. 4D are explanatory diagrams showing a fabrication process of the torque rod 10. A prepreg sheet 36 that serves as a composite sheet, as illustrated in Fig. 5, is used in the fabrication of the torque rod 10.

The prepreg sheet 36 is formed by threads of reinforcing members 24 and threads of fiber-shaped resins 38 being woven together. The reinforcing members 24 are constituted by glass fibers that are plurally arrayed. The fiber-shaped resins 38 are constituted by aliphatic polyamide fibers, which are a thermoplastic resin. In the prepreg sheet 36, the reinforcing members 24 form the warp and the fiber-shaped resins 38 form the weft. The prepreg sheet 36 is formed with a thickness dimension from 2 mm to 4 mm.

The term "prepreg" as used herein refers to a reinforced plastic molding material in which additives such as a curing agent, an adhesive and the like are mixed with a thermoplastic resin, the mixture is impregnated into a fiber-shaped reinforcing material, such as glass cloth or carbon fibers, and is heated or dried to a semi-cured state. In the prepreg sheet 36 according to the present application, as described above, the reinforcing members 24 and the fiber-shaped resins 38 are woven together.

In the present exemplary embodiment, a case is described in which glass fibers are used as the reinforcing members 24, but this is not limiting. For example, as alternatives of the reinforcing members 24, aramid fibers, para-type aramid fibers, carbon fibers or the like may be used. However, glass fibers are suitable for the present exemplary embodiment in which a curving process is applied.

Thread-shaped roving materials of the reinforcing members 24 are cut to the length of the prepreg sheet 36. The reinforcing members 24 are specified with a length that extends over the whole length of the prepreg sheet 36.

The fiber-shaped resins 38 are provided so as to cross over the reinforcing members 24 and are woven so as to pass alternately above and below neighboring reinforcing members 24. The fiber-shaped resins 38 are turned back at the ends of a row in which the reinforcing members 24 are arrayed. The prepreg sheet 36 constituting a sheet-shaped fabric is formed by repetition of this arrangement.

When the torque rod 10 is to be fabricated, as shown in Fig. 5, the prepreg sheet 36 is formed by weaving together plural numbers of the reinforcing members 24 and fiber-shaped resins 38 as described above (a sheet-forming step).

The prepreg sheet 36 is, for example, plurally laminated to assure a predetermined thickness. Then, as illustrated in Fig. 4A, the prepreg sheet 36 is curved into an annular shape and arranged along a cavity 40A of a first lower die 40 for die slide injection.

To be specific, as shown in Fig. 4B, the prepreg sheet 36 is arranged to extend from a halfway portion of the linking portion 16 toward the second annular portion 18, be curved into an annular shape along the second annular portion 18, and then return to the linking portion 16. A distal end portion of the prepreg sheet 36 that has been returned to the linking portion 16 is extended toward the first annular portion 14, is curved into an annular shape along the first annular portion 14, and is then returned to the linking portion 16. This distal end portion is superposed with and temporarily joined to a proximal end portion of the prepreg sheet 36.

As a method of temporary joining, the distal end portion and proximal end portion may be heat-welded.

In this manner, the reinforcing members 24 structuring the prepreg sheet 36 are curved into the annular shape. At a middle portion of the torque rod 10, distal end portions 24A and proximal end portions 24B of the reinforcing members 24 structuring the prepreg sheet 36 are overlapped to form an overlap portion 28.

Thus, a first annular portion structural portion 14A forming the first annular portion 14 in a circular tube shape, a linking portion structural portion 16A forming the linking portion 16 in a rod shape, and a second annular portion structural portion 18A forming the second annular portion 18 in a circular tube shape are formed by the single prepreg sheet 36 (a sheet-arranging step). The singular meaning of the single prepreg sheet 36 as used herein does not encompass a plural number of the prepreg sheet 36 in the length direction of the reinforcing members 24 being joined together. The singular meaning of the single prepreg sheet 36 is intended to encompass cases in which the single prepreg sheet 36 is structured by one sheet of the prepreg sheet 36 as described above and cases in which a plural number of prepreg sheets 36 that are the same are laminated.

In this state, an upper die 42 is mated with the first lower die 40 and the two dies (the first lower die 40 and the upper die 42) are closed and heated to at least 200°C. The fiber-shaped resins 38 of the prepreg sheet 36 accommodated in the mold fuse and solidify. Hence, as shown in Fig. 3, the plurally arrayed reinforcing members 24 are integrated by a resin layer 30 formed of the fused fiber-shaped resins 38. Thus, a core portion 32 is formed (a core portion-forming step).

Fig. 3 is a schematic diagram corresponding to a section cut along line A-A in Fig. 1. Fig. 3 is used to facilitate descriptions of the cross-sectional condition. Accordingly, numbers and spacings of the neighboring reinforcing members 24 differ from an actual cross section and will vary in accordance with the number of layers of the prepreg sheet 36 that are used, how the reinforcing members 24 are woven, and the like.

A first projected recess portion 40B and a second projected recess portion 40C are recessed from the cavity 40A of the first lower die 40. The first projected recess portion 40B is for allowing a lower end portion of the first annular portion structural portion 14A to protrude lower than the linking portion structural portion 16A. The second projected recess portion 40C is for allowing the second annular portion structural portion 18A to protrude lower than the linking portion structural portion 16A. Consequently, in the core portion 32 that is formed, the lower end portion of the first annular portion structural portion 14A projects lower than the linking portion structural portion 16A, and a lower end portion of the second annular portion structural portion 18A projects lower than the linking portion structural portion 16A.

When the prepreg sheet 36 in the first lower die 40 is heated and the fiber-shaped resins 38 fuse, the fused fiber-shaped resins 38 are charged into the first projected recess portion 40B and the second projected recess portion 40C together with the reinforcing members 24. Consequently, in the molded core portion 32, the first annular portion structural portion 14A and second annular portion structural portion 18A may be formed with the reinforcing members 24 being integrated with the resin layer 30 over the whole of the first annular portion structural portion 14A and second annular portion structural portion 18A.

Then, as illustrated in Fig. 4A to Fig. 4D, the mold is opened in a state in which, for example, the molded core portion 32 is supported by the upper die 42. As a method for this, a method may be mentioned in which the core portion 32 is retained at the upper die 42 by negative pressure being applied through small holes, which are not shown in the drawings, provided in a first core portion 42A and a second core portion 42B. The first core portion 42A forms an inner side face of the first annular portion structural portion 14A of the core portion 32 and the second core portion 42B forms an inner side face of the second annular portion structural portion 18A.

In this state, as shown in Fig. 4C, the first lower die 40 is slid away and a second lower die 44, which is a forming die for forming the torque rod 10, is disposed below the upper die 42. Then the upper die 42 is mated with the second lower die 44 and the two dies (the second lower die 44 and the upper die 42) are closed. Thus, the core portion 32 retained by the upper die 42 is accommodated inside the second lower die 44.

A cavity 44A of the second lower die 44 is formed to be larger than the cavity 40A of the first lower die 40. Thus, a gap 46 is formed between the accommodated core portion 32 and the second lower die 44.

In this state, a thermoplastic resin material composed of an unsolidified aliphatic polyamide resin is supplied through an injection nozzle 44B of the second lower die 44 and charged into the cavity 44A of the second lower die 44, and the second lower die 44 is maintained at 200°C or more. Thus, injection molding is implemented (an injection molding step).

Accordingly, as illustrated in Fig. 3, this resin material is integrated with the resin layer 30 formed by the fiber-shaped resins 38 structuring the core portion 32. Thus, a covering layer 34 formed of this resin material is laminated on the outer periphery face of the core portion 32, forming the reinforced rod main body 12. The meaning of the term "laminated" as used herein is intended to encompass the covering layer 34 being accumulated and formed on the core portion 32.

In the present exemplary embodiment, the injection molding is carried out using an aliphatic polyamide resin, but this is not limiting. Constitution with an equivalent resin that has high affinity to the resin forming the core portion 32, or with the same resin as the core portion 32, is possible. If a resin with high water repellence or waterproofing is employed, water resistance of the torque rod 10 may be raised.

Flanges may be formed at the torque rod 10 by, for example, flanges being integrally formed at the covering layer 34. Thus, protruding portions may be formed integrally with the core portion 32 formed from the prepreg sheet 36.

In the present exemplary embodiment, the core portion 32 is retained at a middle portion of the cavity 44A of the second lower die 44 with the first annular portion structural portion 14A and second annular portion structural portion 18A of the core portion 32 in area contact with the first core portion 42A and the second core portion 42B, but this is not limiting. For example, the core portion 32 may be disposed in an elevated state in the middle portion of the cavity 44A using pins. In this case, the resin material may be laminated onto both inner and outer faces of the core portion 32. Thus, the rod main body 12 may be formed with the covering layer 34 laminated on all faces of the core portion 32.

In the present exemplary embodiment according to the structure described above, the plural fiber-shaped reinforcing members 24 are arrayed in a row/rows in a central portion of the torque rod 10 that is fabricated, and the reinforcing members 24 are integrated by the fiber-shaped resins 38 that have been woven between the reinforcing members 24 fusing and solidifying. Therefore, the reinforcing members 24 may be more firmly joined to one another than in a structure in which the reinforcing members 24 are dispersed in short fiber shapes through the whole body, and the reinforcing members 24 may be utilized efficiently with regard to improving the strength of the torque rod 10.

The resin layer 30, in which the reinforcing members 24 are integrated, is integrated with the covering layer 34 laminated on the surface of the resin layer 30. If the thermoplastic resin that forms the covering layer 34 were fused and impregnated with the plurally arrayed fiber-shaped reinforcing members 24 to form the torque rod 10, the thermoplastic resin layer would be formed only at surface portions of the reinforcing members 24.

However, in the torque rod 10 according to the present exemplary embodiment, the covering layer 34 at the surface may be integrated with the resin layer 30 provided between the reinforcing members 24. Therefore, separation of the covering layer 34 from the reinforcing members 24 may be suppressed and the strength of the torque rod 10 may be improved.

In this torque rod 10, the first annular portion 14 to be linked to the engine that is a vibration-producing portion and the second annular portion 18 to be linked to the vehicle body that is a vibration-receiving portion are provided; the first annular portion 14 and the second annular portion 18 are formed by the fiber-shaped reinforcing members 24 being curved.

Therefore, stiffness of the first annular portion 14 and second annular portion 18 that bear loads may be raised compared to a structure in which the first annular portion 14 and second annular portion 18 are formed with reinforcing members in short fiber shapes that are finely divided. Thus, unintended opening up or the like of the first annular portion 14 and second annular portion 18 may be suppressed.

The linking portion 16 that links the first annular portion 14 with the second annular portion 18 is formed together with the first annular portion 14 and the second annular portion 18 by the curving of the reinforcing members 24, which improves tensile stiffness of the linking portion 16. Therefore, when a force acts in a direction to move the first annular portion 14 and the second annular portion 18 apart, this force may be resisted by tensile strength of the fiber-shaped reinforcing members 24.

The distal end portions 24A and proximal end portions 24B of the reinforcing members 24 are superposed on the linking portion 16. Thus, resistance to a tensile force may be made greater than in a structure in which the distal end portions 24A and proximal end portions 24B are superposed on the first annular portion 14 or the second annular portion 18.

Furthermore, because the distal end portions 24A and proximal end portions 24B of the reinforcing members 24 are disposed away from the first annular portion 14 and second annular portion 18 that are more likely to bear loads, durability of the torque rod 10 may be improved.

Because the single prepreg sheet 36 in which the thermoplastic fiber-shaped resins 38 are woven between the fiber-shaped reinforcing members 24 is employed, the torque rod 10 including the first annular portion 14, the second annular portion 18 and the linking portion 16 may be formed easily.

In the present exemplary embodiment, the torque rod 10 is given as an example of a damping member and described, but this is not limiting. The present invention is also applicable to, for example, a damping member such as an engine mount bracket, a suspension mount bracket or the like and a fabrication process of this damping member.

These brackets may be formed without the prepreg sheet 36 being curved into an annular shape. An engine mount bracket, suspension mount bracket or the like may be formed into a "U" shape in cross section by bending of edge portions of the prepreg sheet 36 in advance, and reinforcing flanges may be formed at side portions.

The reinforcing members 24 structuring the prepreg sheet 36 are curved into the annular shape. The term "the reinforcing members 24 being curved into an annular shape" refers to the reinforcing members 24 being looped. The first annular portion 14 and second annular portion 18 formed by the reinforcing members 24 are not necessarily in circular tube shapes but may be in rectangular tube shapes.

The meaning of "the reinforcing members 24 structuring the prepreg sheet 36 being curved into an annular shape" is not limited to states in which the distal end portions 24A and proximal end portions 24B of the looped reinforcing members 24 are superposed. That is, the meaning of the term "annular shape" is intended to encompass states in which the distal ends and proximal ends of the looped reinforcing members 24 abut together and states in which the distal ends and proximal ends of the looped reinforcing members 24 are set apart.

The disclosures of Japanese Patent Application No. 2015-158388 filed August 10, 2015 are incorporated into the present specification by reference in their entirety.

All references, patent applications and technical specifications cited in the present specification are incorporated by reference into the present specification to the same extent as if the individual references, patent applications and technical specifications were specifically and individually recited as being incorporated by reference.

## Claims

1. A damping member for linking a vibration-producing portion with a vibration-receiving portion, the damping member comprising:
a plurality of arrayed fiber-shaped reinforcing members;
a thermoplastic resin layer in which a fiber-shaped thermoplastic resin that is woven between the reinforcing members has been fused and integrated with the reinforcing members; and
a thermoplastic resin forming a covering layer that is laminated on a surface of the thermoplastic resin layer.

2. The damping member according to claim 1, wherein a first annular portion, a second annular portion and a linking portion are formed by the reinforcing members being curved into an annular shape,
the first annular portion linking with the vibration-producing portion,
the second annular portion linking with the vibration-receiving portion, and
the linking portion linking the first annular portion with the second annular portion.

3. The damping member according to claim 2, wherein end portions of the reinforcing members are superposed on the linking portion.

4. A fabrication process of a damping member for linking a vibration-producing portion with a vibration-receiving portion, the fabrication process comprising:
forming a composite sheet into a predetermined shape, the composite sheet a fiber-shaped thermoplastic resin being woven between a plurality of arrayed fiber-shaped reinforcing members;
heating the composite sheet;
forming a core portion with a predetermined shape;
placing the core portion in a forming die for forming the damping member;
laminating an unsolidified thermoplastic resin; and
heating the unsolidified thermoplastic resin.

5. A fabrication process of a damping member that includes:
a first annular portion for linking with a vibration-producing portion,
a second annular portion for linking with a vibration-receiving portion, and
a linking portion for linking the first annular portion with the second annular portion, the fabrication process comprising:
curving a composite sheet in which a fiber-shaped thermoplastic resin is woven between a plurality of arrayed fiber-shaped reinforcing members;
forming the composite sheet into a predetermined shape;
heating the composite sheet;
forming a core portion including a portion that is to structure the first annular portion, a portion that is to structure the second annular portion, and a portion that is to structure the linking portion;
placing the core portion in a forming die for forming the damping member;
laminating an unsolidified thermoplastic resin; and
heating the unsolidified thermoplastic resin.

6. The fabrication process of a damping member according to claim 5, wherein forming the core portion includes superposing end portions of the composite sheet on the portion that is to structure the linking portion.
